# EUROPÄISCHE PATENTSCHRIFT

(11) **EP 1 883 746 B1**
(45) Veröffentlichungstag und Bekanntmachung des Hinweises auf die Patenterteilung: **14.07.2010**
(21) Anmeldenummer: 06725401.1
(22) Anmeldetag: 29.03.2006
(51) Int. Cl.: F02B 77/08, F02D 41/30, F02P 19/00

(54) **VERBINDUNGSBAUTEIL ZUR ELEKTRISCHEN VERBINDUNG EINES SENSORELEMENTES UND EINER AUSWERTESCHALTUNG**
CONNECTION COMPONENT FOR ELECTRICALLY CONNECTING A SENSOR ELEMENT AND AN EVALUATION CIRCUIT
ELEMENT D'ASSEMBLAGE POUR CONNEXION ELECTRIQUE D'UN ELEMENT DE DETECTION ET D'UN CIRCUIT D'EVALUATION

(30) Priorität: 17.05.2005 DE 102005022674
(43) Veröffentlichungstag der Anmeldung: 06.02.2008
(73) Patentinhaber: ROBERT BOSCH GMBH, 70442 Stuttgart (DE)
(72) Erfinder: GLOCK, Oliver, 70378 Stuttgart (DE); SCHOLZEN, Holger, 70469 Stuttgart (DE); KLENK, Mathias, 74369 Loechgau (DE); KRUEGER, Juergen, 71686 Remseck-aldingen (DE)
(86) Internationale Anmeldenummer: PCT/EP2006/061145
(87) Internationale Veröffentlichungsnummer: WO 2006/122848

(56) Entgegenhaltungen:
- EP-A- 1 061 352
- PATENT ABSTRACTS OF JAPAN Bd. 1997, Nr. 01, 31. Januar 1997 (1997-01-31) & JP 08 232700 A (UNISIA JECS CORP), 10. September 1996 (1996-09-10)
- PATENT ABSTRACTS OF JAPAN Bd. 1998, Nr. 13, 30. November 1998 (1998-11-30) & JP 10 213056 A (KUBOTA CORP), 11. August 1998 (1998-08-11)

## Beschreibung

Die Erfindung bezieht sich auf das elektrische Verbindungsbauteil zwischen einem Sensorelement und einer Auswerteschaltung, insbesondere eines in einer Motoranbaukomponente eingesetzten Sensorelementes für Verbrennungskraftmaschinen.

### Stand der Technik

Zur Herstellung einer elektrisch leitenden Verbindung zwischen einem Sensorelement und einer die Signale des Sensorelementes auswertenden Auswerteschaltung kommen bisher Verbindungstechniken zum Einsatz, welche eine zueinander definierte und fixierte Verbindung der elektrisch mit einander zu kontaktierenden Bauteile voraussetzen. Bekannte Kontaktierungsverfahren zur Herstellung einer elektrischen Verbindung sind unter anderem das Bonden, das Kleben sowie das Schweißen. Neue Kontaktierungsverfahren wie z. B. das dreidimensionale Bonden (3D-Bonden) sind noch nicht praxistauglich und bergen hohe technische Risiken.

Die oben angesprochenen Kontaktierungsverfahren zur Herstellung einer elektrischen Verbindung zwischen einem Sensorelement und einer Auswerteschaltung können zu starken Einschränkungen hinsichtlich der Konstruktion eines Verbindungsbauteiles führen und starke Einschränkungen hinsichtlich einer späteren Zugänglichkeit der miteinander elektrisch verbundenen Bauteile wie z. B. einem Sensorelement und einer Auswerteschaltung nach sich ziehen.

Wird z. B. eine Trennung zwischen einer Motoranbaukomponente wie z. B. einer Glühstiftkerze und einer Auswerteschaltung in Gestalt eines Hybrides vorgenommen, so ist es erforderlich, im Wege des Klebens, Bondens oder Schweißens hergestellte elektrische Verbindungen wieder zu trennen, um z. B. eine Motoranbaukomponente in Gestalt einer Glühstiftkerze für selbst zündende Verbrennungskraftmaschinen zu demontieren.

### Vorteile der Erfindung

Der Erfindung liegt die Aufgabe zugrunde, eine elektrische Verbindung zwischen einem Sensorelement und einer Auswerteschaltung über ein Verbindungselement zu realisieren, welches trotz zunehmend komplexer werdender Konstruktionen von Motoranbaukomponenten den Einsatz bereits erprobter Fertigungsverfahren ermöglicht.

Der erfindungsgemäß vorgeschlagenen Lösung folgend wird ein Hybridhalter eingesetzt, welcher mit einem Teil z. B. formschlüssig im oberen Bereich der Motoranbaukomponente wie z. B. einer Glühstiftkerze verrastbar ist und dessen anderer Teil, welcher eine Auswertelektronik (Hybrid) aufnimmt relativ zum ersten Teil um eine Schwenkachse aufgestellt werden kann. Der schwenkbare, von einer abgesenkten in einer aufgestellten Lage stellbare Teil des Hybridhalters umfasst bevorzugt eine muldenförmige Vertiefung, in der das Hybrid eingelassen ist. An einer Seite der muldenförmigen Vertiefung kann eine Steckeranschlusskomponente ausgebildet werden, über welche der Hybridhalter mit daran aufgenommener Auswerteelektronik mit einem Motorsteuergerät verbunden werden kann.

Während der erste Teil des Hybridhalters an der Motoranbaukomponente wie z. B. einer Glühstiftkerze für selbstzündende Verbrennungskraftmaschinen formschlüssig aufgenommen werden kann, lässt sich das weitere Teil des Hybridhalters, welcher die muldenförmige Vertiefung zur Aufnahme des Hybrids enthält, um eine Schwenkachse, sei es ein Filmscharnier, sei es eine Drehachse, sei es ein Kippgelenk, von einer abgesenkten Lage in eine aufgestellte Lage aufklappen. Die aufgestellte Position des weiteren Teils stellt die Einbauposition an der Motoranbaukomponente dar. In diesem Falle kann der Hybridhalter über einen konventionellen Steckkontakt mit einer zum zentralen Motorsteuergerät führenden Signalleitung verbunden werden.

Wird hingegen der Hybridhalter an der Motoranbaukomponente montiert, so wird dieser z. B. im oberen Bereich der Motoranbaukomponente in Gestalt einer Glühstiftkerze verrastet und der Hybridhalterteil mit einer muldenförmigen Vertiefung zur Aufnahme der Auswerteelektronik in eine abgesenkte Position geklappt. In dieser Montageposition bilden der abgesenkte Hybridhalterteil und eine obere Stirnfläche der Motoranbaukomponente eine Montageebene. In dieser Montageebene lässt sich das Hybrid in der muldenförmigen Vertiefung des Hybridhalterteiles einlegen und an einer Seite elektrisch kontaktieren. Die mit der Auswertelektronik in Gestalt eines Hybrids elektrisch kontaktierten Signalleitungen können dann - in der selben Montageebene - beispielsweise mit an der Stirnseite aus der Motoranbaukomponente herausgeführten elektrischen Anschlüssen kontaktiert werden. Diese Lösung bietet enorme Vorteile hinsichtlich einer leichten Zugänglichkeit der elektrischen Kontaktstellen an dem Motoranbauteil und am Hybrid und erlaubt andererseits den Ausgleich von Längen und Winkelunterschieden.

Die Schwenkachse zwischen dem Teil des Hybridhalters, welcher an der Motoranbaukomponente formschlüssig verrastbar ist und dem Hybridhalterteil, welches die Auswerteelektronik aufnimmt, kann sowohl als Filmscharnier, als Drehscharnier als auch als Hebelscharnier ausgeführt werden. Zur Begrenzung des Schwenkvorganges lassen sich z. B. Anschlagnocken sowie Verrastungen vorsehen. Der Teil des Hybridhalters, welcher an der Motoranbaukomponente aufgenommen ist, kann auf diese aufgeschnappt oder aufgepresst werden, was die Montage erheblich vereinfacht.

Wird der Hybridhalter z. B. als Kunststoffspritzgussteil gefertigt, so kann die Schwenkachse in vorteilhafter Weise durch ein Filmscharnier in Gestalt einer Querschnittsverjüngung des Kunststoffmaterials ausgestaltet werden. Dies stellt eine sehr einfache und kostengünstig herstellbare Realisationsmöglichkeit für eine Schwenkachse dar.

### Zeichnung

Anhand der Zeichnung wird die Erfindung nachstehend eingehender beschrieben. Die einzige Figur zeigt einen Hybridhalter, der mit einem Teil an einer Motoranbaukomponente verrastet ist und dessen anderer, die Auswerteelektronik aufnehmende Hybridhalterteil sowohl in einer abgesenkten als auch in einer aufgestellten Position dargestellt sind.

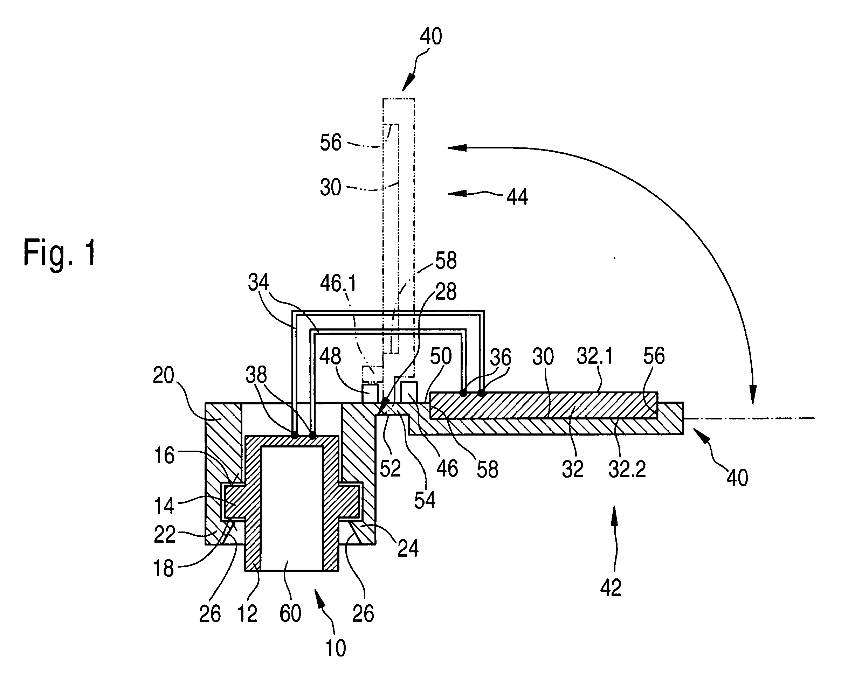

Ausführungsbeispiel Der Darstellung gemäß Fig. 1 ist entnehmbar, dass eine Motoranbaukomponente 10 einen sich in deren Kopfbereich erstreckenden Bund 14 aufweist. Bei der Motoranbaukomponente kann es sich z. B. um eine Glühstiftkerze handeln, wie sie an selbstzündenden Verbrennungskraftmaschinen zum Einsatz kommt. In Glühstiftkerzen können z. B. Brennraumdrucksensoren untergebracht sein, die an der Stirnseite der Motoranbaukomponente 10 mit einer Auswerteelektronik 32 elektrisch zu verbinden sind.

Aus der Darstellung gemäß Fig. 1 geht hervor, dass die Motoranbaukomponente 10 einen im Wesentlichen zylindrisch ausgebildeten Körper 12 umfasst, an dessen Außenumfang der Bund 14 verläuft. Der Bund 14 umfasst eine erste Ringfläche 16 und eine zweite Ringfläche 18. An dem Bund 14 der Motoranbaukomponente 10 wird ein Teil eines Hybridhalters 20 lösbar befestigt. Dazu weist der Hybridhalter 20 einen mindestens ersten Schnappverschluss 22 oder gegebenenfalls einen zweiten Schnappverschluss 24 auf. Anstelle der in der Figur dargestellten Schnappverschlüsse 22 bzw. 24 können auch Verrastungen oder dergleichen vorgesehen sein, um eine lösbare Befestigung zwischen dem Hybridhalter 20 und der Motoranbaukomponente 10 zu gewährleisten.

Die in der Figur dargestellten Schnappverschlüsse 22 bzw. 24 umfassen jeweils Montageschrägen 26, um ein Aufweiten der Schnappverschlüsse 22 bzw. 24 beim Aufstecken auf den Bund 14 bei der Montage des Hybridhalters 20 an der Motoranbaukomponente 10 zu ermöglichen. Sobald die Ausnehmungen des ersten und des zweiten Schnappverschlusses 22 bzw. 24 den Bund 14 übergriffen haben, ergreifen die Vorsprünge der Schnappverschlüsse 22 bzw. 24 die zweite Ringfläche 18, so dass der Hybridhalter 20 lösbar auf der Motoranbaukomponente 10 befestigt ist.

Der Hybridhalter 20 umfasst darüber hinaus eine Aufstellachse 28, die in der Darstellung gemäß der Figur als Filmscharnier durch eine Querschnittsreduzierung 54 ausgebildet ist. Anstelle der Querschnittsreduzierung 54 ist auch denkbar, eine Drehscharnier oder ein Kippscharnier als Schwenkachse 28 auszubilden. Ein Hybrid 32 ist in eine Aufnahmemulde 30 des Hybridhalters 20 eingelegt. Die Oberseite des Hybrids 32 ist mit Bezugszeichen 32. 1 bezeichnet, während die Unterseite des Hybrids 32 durch Bezugszeichen 32.2 identifiziert ist. Der in der Aufnahmemulde 30 angeordnete Hybrid 32 wird durch eine erste Begrenzung 56 bzw. eine zweite Begrenzung 58 in der Aufnahmemulde 30 gegen Verrutschen gesichert.

Am Hybridhalter 20 ist im Bereich der ersten Begrenzung 56 eine Anbaustelle 40 für einen Steckkontakt ausgebildet, über welche der Hybridhalter 20 mit darin aufgenommener Auswerteelektronik 32 in einer aufgestellten Position 44 beispielsweise mit einem Motorsteuergerät einer Verbrennungskraftmaschine elektrisch verbindbar ist.

Aus der Darstellung gemäß der Figur geht hervor, dass in der abgesenkten Position 42 der Aufnahmemulde 30 der Hybrid 32 in diesem gut zugänglich liegt. An der Oberseite 32.1 des Hybrids 32 können somit Kontaktierungsleitungen 34 an einer Anschlussstelle 36 mit dem Hybrid 32 verbunden werden. Die Kontaktierungsleitungen 34 werden andererseits an einer Anschlussstelle 38 an der Stirnseite der Motoranbaukomponente 10 z. B. einer Glühstiftkerze elektrisch verbunden. Hervorzuheben ist, dass die Ebenen, in denen die Anschlussstelle 36 und die Anschlussstelle 38 an der Motoranbaukomponente 10 liegen, gleich orientiert sind, so dass die Stirnseite der Motoranbaukomponente 10 sowie die Oberseite 32.1 des Hybrids 32 eine wenn auch einen Versatz aufweisende Ebene bilden, die eine gute Zugänglichkeit der Anschlussstellen 36 bzw. 38 gewährleistet. Nach Herstellung der elektrischen Kontaktierung des in der Motoranbaukomponente 10 enthaltenen Sensorelementes über die Kontaktierungsleitungen 34 mit dem Hybrid 32 wird der Teil des Hybridhalters der die Aufnahmemulde 30 umfasst von der abgesenkten Position 42 in die gestrichelt dargestellte aufgestellte Position 44 bewegt. Ein an einer Oberseite 50 des Hybridhalters 20 vorgesehener Anschlagnocken 46 fährt dabei in eine gestrichelt wiedergegebene Anschlagposition 46.1 und schlägt an einem optional die Aufstellbewegung begrenzenden Anschlag 48 an, der ebenfalls an der Oberseite 50 des Hybridhalters 20 ausgebildet ist. Wie bereits erwähnt, wird die Aufstellachse 28 in diesem Ausführungsbeispiel durch eine Querschnittsreduzierung 54 zwischen der Oberseite 50 und der Unterseite 52 des Hybridhalters 20 dargestellt. Die Motoranbaukomponente 10 in Gestalt einer Glühstiftkerze umfasst einen Hohlraum 60, durch den das in der Figur nicht dargestellte Sensorelement ausgeführt ist. Das über dem Hohlraum 60 untergebrachte Sensorelement, bei dem es sich beispielsweise um einen Brennraumdrucksensor handeln kann, wird an der Anschlussstelle 38 mit den Kontaktierungsleitungen 34 verbunden, die ihrerseits an der Anschlussstelle 36 mit der Oberseite 32.1 des Hybrids 32 elektrisch verbunden werden.

Wird der die Aufnahmemulde 30 umfassende Teil des Hybridhalters 20 von der abgesenkten Position 42 in die aufgestellte Position 44 verbracht, so ist die in der abgesenkten Position 42 im Bereich der ersten Begrenzung 46 angeordnete Anbaustelle 40 für einen Steckkontakt von der vertikalen Position in die horizontale Position aufgestellt, so dass diese von oben her ebenfalls sehr gut zugänglich ist. Dies vereinfacht bei einer Demontage, d. h. bei einem Abziehen des Steckers von der Anbaustelle 40, die Zugänglichkeit erheblich. Wird nach abziehen des Steckers der Anbaustelle 40 vom Hybridhalter 20 der in der aufgestellten Position 44 befindliche, die Aufnahmemulde 30 enthaltende Teil des Hybridhalters 20 wieder in die abgesenkte Position 42 gestellt, so sind die Anschlussstellen 36 bzw. 38, die Kontaktierungsleitungen 34, welche das Sensorelement mit der Auswerteelektronik 32 verbinden, sehr gut zugänglich, da sie in einer Ebene liegen. Die Ebene wird definiert durch die Stirnseite der Motoranbaukomponente 10, in der die Anschlussstelle 38 liegt, bzw. durch die Oberseite 32.1 des Hybrids 32. Der Anschlag 48 an der Oberseite 50 des Hybridhalters 20 dient zur Begrenzung des Schwenkweges des bewegbaren Teiles des Hybridhalters 20 von der abgesenkten Position 42 in die aufgestellte Position 44. Daneben kann über den Anschlag 48, zusammenwirkend mit dem Anschlagnocken 46 an der Oberseite 50 des bewegbaren Teils des Hybridhalters 20, der Schwenkvorgang in die aufgestellte Position 44 begrenzt werden. Anstelle der in der Figur dargestellten Schnappverschlüsse 22 bzw. 24 kann auch eine Verrastung des Hybridhalterteiles 20 der Motoranbaukomponente 10 in Gestalt einer Glühstiftkerze erfolgen.

### Bezugszeichenliste

- 10: Motoranbaukomponente (Glühstiftkerze)
- 12: Körper
- 14: Bund
- 16: 1. Ringfläche
- 18: 2. Ringfläche
- 20: Hybridhalter
- 22: 1. Schnappverschluss
- 24: 2. Schnappverschluss
- 26: Montageschräge
- 28: Ausstellachse
- 30: Aufnahmemulde
- 32: Hybrid (Auswerteelektronik)
- 32.1: Oberseite Hybrid
- 32.2: Unterseite Hybrid
- 34: Kontaktierungsleitungen
- 36: Anschlussstelle Hybrid
- 38: Anschlussstelle Motoranbau- komponente
- 40: Anbaustelle für Stecker
- 42: abgesenkte Position
- 44: aufgestellte Position
- 46: Anschlagnocken
- 46.1: aufgestellte Position An- schlagnocken
- 48: Anschlag
- 50: Oberseite
- 52: Unterseite
- 54: Querschnittreduzierung
- 56: 1. Begrenzung
- 58: 2. Begrenzung
- 60: Hohlraum Motoranbaukom- ponente

## Patentansprüche

1. Vorrichtung zur elektrischen Verbindung eines Sensorelementes, welches in einer Motoranbaukomponente (10) aufgenommen ist, mit einer Auswerteelektronik (32), wobei die Motoranbaukomponente (10) und die Auswerteelektronik (32) über Kontaktierungsleitungen (34) elektrisch miteinander verbunden sind, **dadurch gekennzeichnet, dass** die Auswerteelektronik (32) in einem schwenkbaren Teil (30) eines Hybridhalters (20) aufgenommen ist, wobei der schwenkbare Teil (30) relativ zu einem an der Motoranbaukomponente (10) formschlüssig befestigten Teil des Hybridhalters (20) bewegbar ist.

2. Vorrichtung gemäß Anspruch 1 **dadurch gekennzeichnet, dass** der Hybridhalter (20) über Formschlusselemente (14; 22, 24) lösbar an der Motoranbaukomponente (10) befestigt ist.

3. Vorrichtung gemäß Anspruch 1, **dadurch gekennzeichnet, dass** der Hybridhalter (20) eine schwenkbare Aufnahmemulde (30) zur Aufnahme der Auswerteelektronik (32) aufweist, wobei die Aufnahmemulde (30) von einer abgesenkten Position (42) in eine aufgestellte Position (44) und umgekehrt stellbar ist.

4. Vorrichtung gemäß Anspruch 3, **dadurch gekennzeichnet, dass** in der abgesenkten Position (42) der Aufnahmemulde (30) eine elektrische Anschlussstelle (38) der Motoranbaukomponente (10) und eine elektrische Anschlussstelle (36) der Auswerteelektronik (32) im Wesentlichen in einer Ebene liegen.

5. Vorrichtung gemäß Anspruch 3, **dadurch gekennzeichnet, dass** die Aufnahmemulde (30) um eine Achse (28) bewegbar ist, die als Filmscharnier (54), oder als Drehscharnier oder als Hebelscharnier ausgeführt ist.

6. Vorrichtung gemäß Anspruch 3, **dadurch gekennzeichnet, dass** an der Aufnahmemulde (30) eine Anbaustelle (40) für ein Steckerelement ausgeführt ist.

7. Vorrichtung gemäß Anspruch 3, **dadurch gekennzeichnet, dass** in der abgesenkten Position (42) der Aufnahmemulde (30) des Hybridelementes (20) die Auswerteschaltung (32) und die Motoranbaukomponente (10) aus der gleichen Richtung zugängig sind.

8. Vorrichtung gemäß Anspruch 3, **dadurch gekennzeichnet, dass** die Schwenkbewegung der Aufnahmemulde (30) von der abgesenkten Position (42) in die aufgestellte Position (44) von einem Anschlag (48) des Hybridhalters (20) begrenzt ist.

9. Vorrichtung gemäß Anspruch 2, **dadurch gekennzeichnet, dass** der Hybridhalter (20) entweder mindestens ein als Schnappverschluss (22, 24) ausgebildetes Formschlusselement oder mindestens ein als Verrastung ausgebildetes Formschlusselement aufweist, mit denen der Hybridhalter (20) an einem Bund (14) der Motoranbaukomponente (10) befestigt ist.

10. Vorrichtung gemäß Anspruch 1, **dadurch gekennzeichnet, dass** die Motoranbaukomponente (10) eine einen Brennraumdrucksensor enthaltende Glühstiftkerze ist.

## Claims

1. Device for electrically connecting a sensor element, which is accommodated in an engine add-on component (10), to an evaluation electronic unit (32), the engine add-on component (10) and the evaluation electronic unit (32) being electrically connected to one another via contact-making lines (34), **characterized in that** the evaluation electronic unit (32) is accommodated in a pivotable part (30) of a hybrid holder (20), the pivotable part (30) being movable relative to a part of the hybrid holder (20) which is fixed to the engine add-on component (10) in a positively locking manner.

2. Device according to Claim 1, **characterized in that** the hybrid holder (20) is fixed to the engine add-on component (10) in a releasable manner by means of positively locking elements (14; 22, 24).

3. Device according to Claim 1, **characterized in that** the hybrid holder (20) has a pivotable accommodating trough (30) for accommodating the evaluation electronic unit (32), the accommodating trough (30) being adjustable from a lowered position (42) into a raised position (44), and vice versa.

4. Device according to Claim 3, **characterized in that**, in the lowered position (42) of the accommodating trough (30), an electrical connection location (38) of the engine add-on component (10) and an electrical connection location (36) of the evaluation electronic unit (32) lie substantially in one plane.

5. Device according to Claim 3, **characterized in that** the accommodating trough (30) is movable about an axis (28) embodied as a film hinge (54), or as a rotary hinge or as a lever hinge.

6. Device according to Claim 3, **characterized in that** an attachment location (40) for a plug element is embodied on the accommodating trough (30).

7. Device according to Claim 3, **characterized in that**, in the lowered position (42) of the accommodating trough (30) of the hybrid element (20), the evaluation circuit (32) and the engine add-on component (10) are accessible from the same direction.

8. Device according to Claim 3, **characterized in that** the pivoting movement of the accommodating trough (30) from the lowered position (42) into the raised position (44) is limited by a stop (48) of the hybrid holder (20).

9. Device according to Claim 2, **characterized in that** the hybrid holder (20) has either at least one positively locking element designed as a snap-action fitting (22, 24) or at least one positively locking element designed as a latch, by means of which the hybrid holder (20) is fixed to a collar (14) of the engine add-on component (10).

10. Device according to Claim 1, **characterized in that** the engine add-on component (10) is a glow plug containing a combustion chamber pressure sensor.

## Revendications

1. Dispositif de raccordement électrique d'un élément de sonde logé dans un composant (10) à monter sur un moteur, avec une électronique d'évaluation (32), le composant (10) à monter sur un moteur et l'électronique d'évaluation (32) étant reliés électriquement l'un à l'autre par des conducteurs de contact (34), **caractérisé en ce que**
l'électronique d'évaluation (32) est logée dans une partie pivotante (30) d'un support hybride (20) et
**en ce que** la partie pivotante (30) peut se déplacer par rapport à une partie du support hybride (20) fixée en correspondance géométrique sur le composant (10) à monter sur un moteur.

2. Dispositif selon la revendication 1, **caractérisé en ce que** le support hydride (20) est fixé de manière libérable au composant (10) à monter sur un moteur par des éléments (14; 22, 24) en correspondance géométrique.

3. Dispositif selon la revendication 1, **caractérisé en ce que** le support hybride (20) présente une moulure pivotante de réception (30) qui loge l'électronique d'évaluation (32), la moulure de réception (30) pouvant être placée depuis une position abaissée (42) jusque dans une position relevée (44) et inversement.

4. Dispositif selon la revendication 3, **caractérisé en ce que** dans la position abaissée (42) de la moulure de réception (30), un emplacement (38) de raccordement électrique du composant (10) à monter sur un moteur et un emplacement (36) de raccordement électrique de l'électronique d'évaluation (32) sont situés essentiellement dans un même plan.

5. Dispositif selon la revendication 3, **caractérisé en ce que** la moulure de réception (30) peut se déplacer autour d'un axe (28) réalisé sous la forme d'une charnière en film (54), d'une charnière rotative ou d'une charnière à levier.

6. Dispositif selon la revendication 3, **caractérisé en ce qu'**un emplacement de montage (40) d'un élément d'enfichage est réalisé sur la moulure de réception (30).

7. Dispositif selon la revendication 3, **caractérisé en ce que** dans la position abaissée (42) de la moulure de réception (30) de l'élément hydride (20), le circuit d'évaluation (32) et le composant (10) à monter sur un moteur sont accessibles dans la même direction.

8. Dispositif selon la revendication 3, **caractérisé en ce que** le déplacement de pivotement de la moulure de réception (30) depuis la position abaissée (42) jusque dans la position relevée (44) est limité par une butée (48) du support hybride (20).

9. Dispositif selon la revendication 2, **caractérisé en ce que** le support hybride (20) présente au moins un élément de mise en correspondance géométrique configuré comme fermeture rapide (22, 24) ou au moins un élément de mise en correspondance géométrique configuré comme encliquetage, par lesquels le support hybride (20) est fixé à un collet (14) du composant (10) à monter sur un moteur.

10. Dispositif selon la revendication 1, **caractérisé en ce que** le composant (10) à monter sur un moteur est une bougie crayon de préchauffage contenant un détecteur de la pression qui règne dans la chambre de combustion.
